# EUROPEAN PATENT SPECIFICATION

(11) **EP 0 666 444 B1**
(45) Date of publication and mention of the grant of the patent: **09.04.1997**
(21) Application number: 95200204.6
(22) Date of filing: 27.01.1995
(51) Int. Cl.: F16L 3/137, F16L 3/14, F16B 37/02

(54) **Universal pipe bracket**
Universale Rohrschelle
Collier universel pour tuyaux

(30) Priority: 02.02.1994 NL 9400159
(43) Date of publication of application: 09.08.1995
(73) Proprietor: J.H. DE WIT EN ZONEN B.V., NL-5700 AB Helmond (NL)
(72) Inventor: Thoolen, Wilhelm Franciscus, NL-6077 CG St. Odilienberg (NL)
(74) Representative: de Bruijn, Leendert C.

(56) References cited:
- DE-U- 1 959 167
- FR-A- 2 071 357
- FR-A- 2 214 850
- FR-A- 2 279 010
- FR-A- 2 410 168
- FR-A- 2 452 655
- NL-A- 8 200 870

## Description

The invention is related to a pipe bracket which has an annular support element, within which a pipe can be accommodated, which support element has a hole for receiving a screw threaded pin, as well as a nut element for connecting the pin to the support element.

Such a pipe bracket is known from FR-A-207 1357. This known bracket has the disadvantage that adjustment of the height at which the pipe is mounted is not possible once the pipe has been installed. If the known bracket has to be adjusted, the pipe has to be removed, after which the bracket can be turned in the desired direction. The pipe then has to be fixed in the bracket again. This disadvantage is felt in particular in the case of liquid discharge pipes, such as waste/drain pipes, which have to run at a certain inclination.

The pipe brackets are fixed to a ceiling or a well; mounting on the underside of a floor, for example in the crawl space, is another possibility. Often, a pin with a threaded end is applied. The pin is introduced beforehand into the ceiling or wall. The threaded end is sawn off to the desired length in situ, these measures being carried out in such a way, that the mounted pipe has the required inclination.

The known brackets are provided with a fixed nut which is screwed onto the threaded end, which has been mounted beforehand as described, until the bracket has reached the required position for water drainage. However, the threaded end, which often has been sawn off by hand, has a burr, as a result of which is difficult to fit the nut on the threaded end. The threaded end therefore first has to be filed down, which is very labour intensive.

The aim of the invention is to provide a pipe bracket which lacks these disadvantages. This aim is achieved in that the nut element is slidable essentially the tangential direction with respect to the hole in the support element, and has parallel ribs, the spacing of which is equal to the spacing of the screw thread of the pin.

To prevent the pin being inserted too far and damaging the pipe, the hole has internal stop nibs to delimit the distance over which a pin can be pushed into the hole from the side facing away from the pipe.

The stop nibs can be hook-shaped in the direction towards the side facing away from the pipe and oblique on the other side and can each be located at the end of a spring arm, which spring arms are each located in an axial groove in the wall of the hole, in such a way that when a pin is inserted from the side facing towards the pipe bracket the stop nibs are forced apart. The pipe bracket can then be fixed using various types of pins, as will be explained below.

The invention also relates to a pipe bracket according to the invention, wherein the nut element comprises two lips which are each provided with parallel ribs, which lips are located in diametrically opposing positions in the hole.

The support element has two slots which open tangentially into the hole and in which the lips can be slid. Furthermore, the ribs of one lip are offset in their transverse direction by half the rib spacing with respect to the ribs of the other lip. In this way a firm, uniform support for the pipe bracket is obtained.

In order to fix the nut element in the correct position in the support element with respect to the pin, the lips are joined to one another at one end by a stop plate which in the working position of the lips is in contact with the side of the fixing block where the slots open. To prevent the nut element falling out of the support element, each lip carries a barb-shaped protrusion at its end distal to the stop plate, which barb-shaped protrusion is accommodated in a groove in each slot and can be hooked firmly behind a shoulder provided in the groove.

The said pipes are available in various diameters and, therefore, the known pipe brackets are available in various standard sizes. The fact that the known pipe brackets have to be available in various sizes leads to high production and stock-holding costs. Moreover, the flexibility is limited; a good mounting is not available for pipes of non-standard dimensions.

According to the invention, the pipe bracket can be further improved in that the support element comprises a flexible strip, the length of which is adjustable depending on the diameter of the pipe to be accommodated. In a simple embodiment, a fixing block is provided to which the flexible strip and the mounting means are fixed. The flexible strip can be pulled tight around the pipe and fixed in this position. Consequently, the pipe bracket can be used for diverse pipe diameters, including those which do not conform to a particular standard.

The flexible strip can preferably be secured by means of at least one ratchet connector. When the strap is pulled tight around the pipe, the strap can also be fixed in place immediately by means of this ratchet connector. It is also possible to fix the strap by two such ratchet connectors, each of which then interacts with one particular end of the strap.

According to an embodiment which is easy to use, the fixing block is provided with two flexible strips located either side, one of said strips carrying a fastener provided with barb-shaped teeth at its end and the other being provided over at least part of its length with corresponding barb-shaped teeth which face in the opposite direction and which can be made to interact with the teeth of the fastener, depending on the diameter of the pipe to be accommodated.

The fastener can have a slit running in the longitudinal direction of the associated section of the strap, which slit is delimited on one side by a resilient closing lip provided with barb-shaped teeth. The pipe bracket can be released by lifting up this lip, for example using a screwdriver, in such a way that the teeth no longer engage with one another and the relevant section of the strap can be slid out of the slit.

Fixing block, strip or strips and ratchet connector can very readily be produced in one piece from plastic.

According to a second possibility, the hole in the fixing block has a widened section on the side facing towards the pipe, in which widened section the protruding collar of a knock-in plug can be accommodated. The invention also relates to a combination of a pipe bracket according to the invention and a knock-in plug provided with a plastic plug body provided with a collar and a knock-in screw inserted in the plug body. The knock-in screw can be driven into the plug using a hammer in a known manner and if necessary can be tightened using a screwdriver.

Finally, the invention also relates to a tensioning element for tensioning the strip. Preferably, the tensioning element has a toothed shape which can be made to interact with a barb-shaped tooth of the flexible strip provided with teeth.

The invention will be explained in more detail below with reference to a few illustrative embodiments shown in the figures.

Fig. 1 shows a perspective view of the pipe bracket according to the invention and a pipe fixed thereto.

Fig. 2 shows the pipe bracket on its own.

Fig. 3 shows a perspective view, partly in cross-section.

Fig. 4 shows cross-section IV-IV from Figure 3.

Fig. 5 shows a partial top view of Figure 3.

Fig. 6 shows a cross-section of a fastener.

Fig. 7 shows a perspective view, partly in cross-section, of the pipe bracket.

Fig. 8 shows the pipe bracket with a tensioning element in the not yet completely tensioned state.

Fig. 9 shows the pipe bracket according to Figure 8 with the tensioning element in the tensioned state.

Fig. 10 shows a first embodiment of the tensioning element.

Fig. 11 shows a second embodiment of the tensioning element.

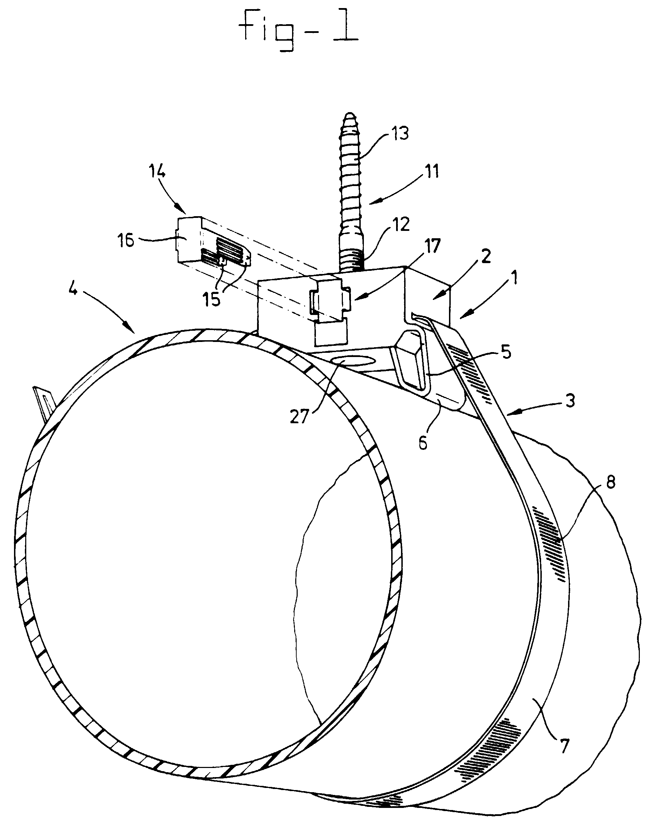

The pipe bracket 1 shown in Figure 1 comprises a fixing block 2 and a flexible strip 3 which is provided with barb-shaped teeth and in which a pipe 4 is mounted. By means of the flexible strip 3, the pipe 4 is held pressed against locating ridges 5, only one of which can be seen in Figure 1.

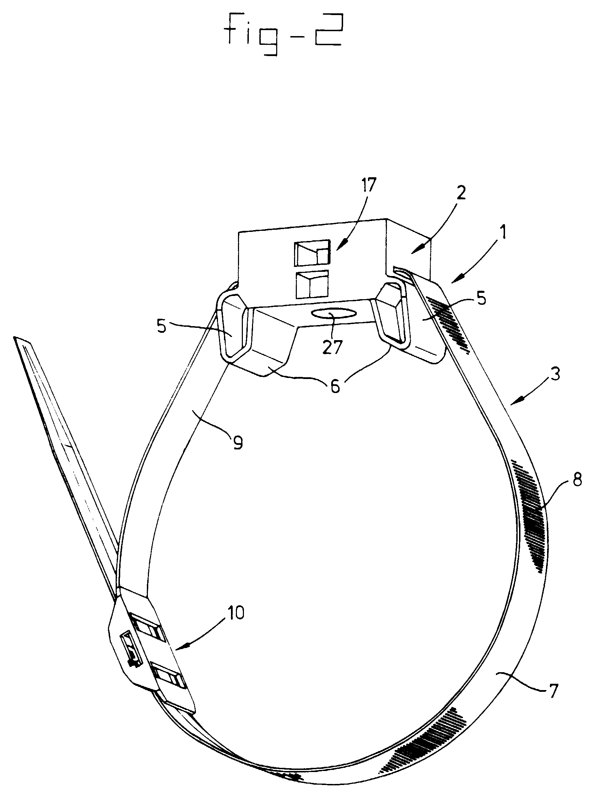

As shown in Figure 2, the fixing block 2 carries two such locating ridges 5, which have an inclined inner face 6 such that pipes of different diameters can be reliably supported.

It can also be seen in Figure 2 that the flexible strip 3 is composed of two sections, the one section 7 of which carries barb-shaped teeth 8 and the other section 9 of which carries a fastener, which is indicated in its entirety by 10.

It can also be seen in Figure 1 that the fixing block 2 carries a pin 11, which consists of a threaded end 12 and screw end 13 which, for example, can be screwed into a plug fitted in a wall or floor. The threaded end 12 is secured in the fixing block 2 by means of the sliding nut, which is indicated in its entirety by 14 and in Figure 1 is shown both when it has been removed and in the fitted position.

The sliding nut 14 comprises two lips 15 which are connected to one another by a stop plate 16. Said lips 15 can be pushed into a hole 17 in the fixing block 2. Said hole 17 can also clearly be seen in Figures 3, 4, 5 and 7.

The hole 17 is delimited by a barrier 18 on the side of the fixing block 2 which faces towards the pipe and by the intermediate barrier 19 on the other side. The hole wall sections 20 extend between said barriers 18, 19, but not over the entire width of the hole 17. As a result, openings 22, in which the lips 15 fit, remain between the barriers 18, 19 and the walls 21 of the hole 17.

The lips 15 carry barb-shaped teeth 23 which face outwards and which are each accommodated in a groove 24 of the relevant hole wall 21.

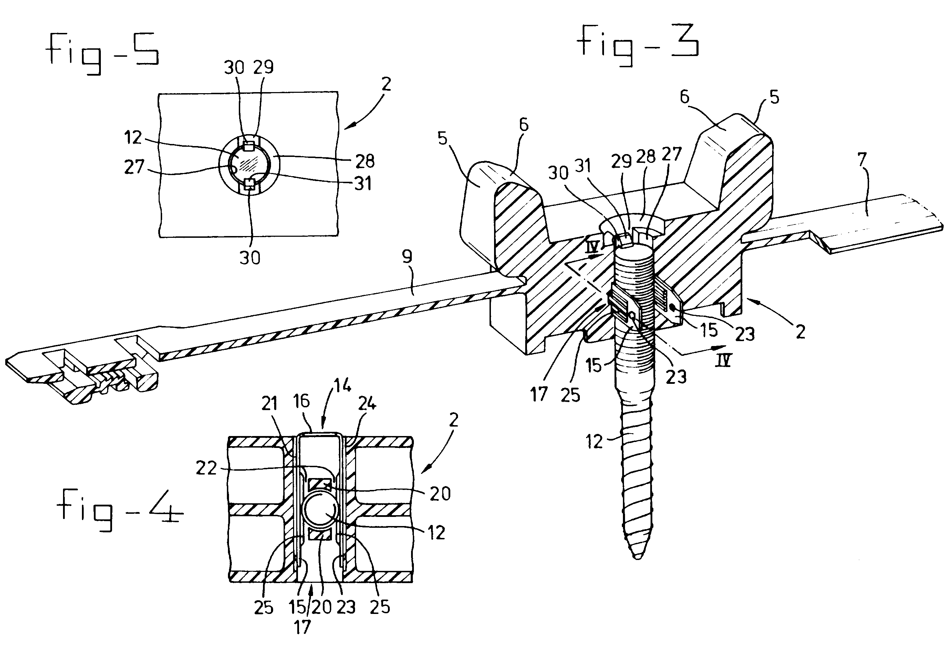

On the sides which face towards one another, the lips 15 have ribs 25, which are mutually offset by half a rib spacing with respect to one another. The screw thread of the threaded end 12 fits between the ribs 25, as can be seen in Figures 3 and 4.

On its side facing towards the pipe, the fixing block 2 also has an interior barrier 26, into which the hole 27 for the threaded end 12 having a widened section 28 opens. The hole 27 is not completely cylindrical, but has grooves 29 in which spring arms 30 are accommodated which form a continuation of the wall of the hole 27. Stop nibs 31, by means of which it can be prevented that the threaded end 12 of the pin could be pushed too far in the direction towards the pipe, are arranged at the end of the spring arms 30.

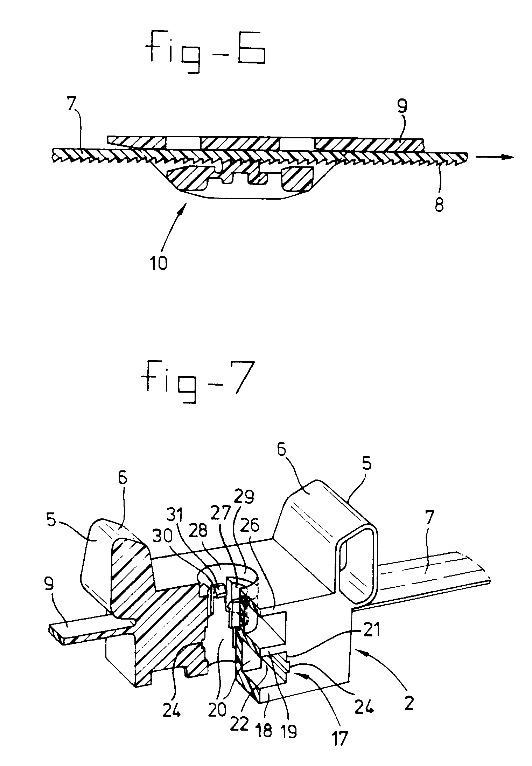

As can clearly be seen in Figure 7, the side of the stop nibs 31 which faces away from the pipe is square, whereas the side facing towards the pipe tapers obliquely. As a consequence it is possible to insert, for example, a knock-in plug from the end facing towards the pipe, the spring arms 30 then being pushed outwards by the sloping shape of the stop nibs.

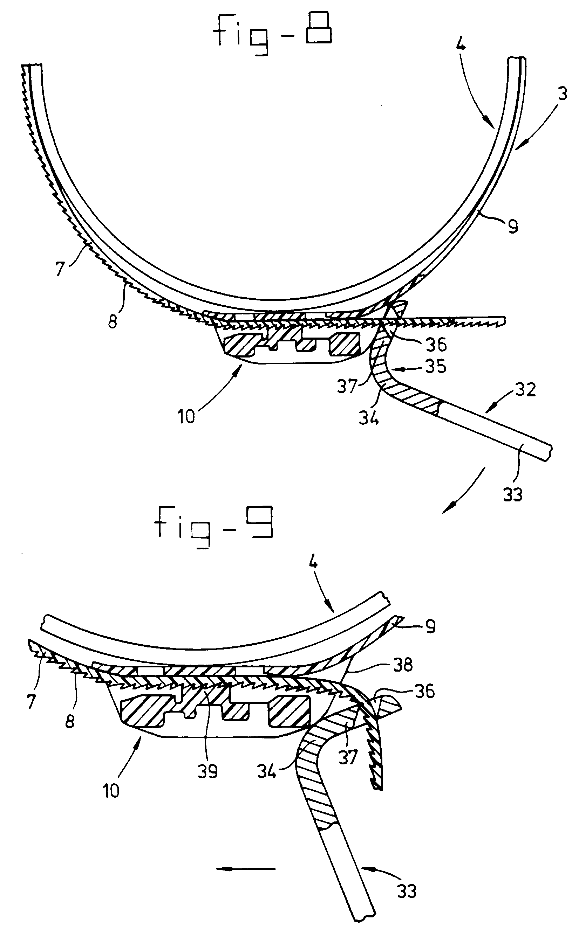

The cross-section in Figure 8 shows a pipe bracket which is drawn loosely around the pipe 4. The section 7 provided with teeth 8 is pushed into the fastener 10, but can still be pulled tighter. As tightening of the section 7 by hand can be difficult, a separate tensioning element 32 is provided, which is shown in partial cross-section in Figure 8.

The tensioning element 32 has a handle 33 which, via the curved region 34, merges into tensioning head 35. Said tensioning head is provided with a slit-shaped opening 36, into which the section 7 of the strap can be pushed. The opening 36 has a sharp edge 37, which can engage behind one of the teeth 8.

The tensioning element 32 is fitted on the strap 7 in connection with the tensioning of the strap 7, 9. In this operation, the tensioning head 36 must come to bear against the surface 38 of the fastener 10. The tensioning element 32 is then turned in such a way that the curved section 34 rolls over the surface 38 of the fastener 10. By this means strap section 7 is pulled through the fastener 10, the teeth 8 clicking over the teeth 39 of the fastener 10. This results in the position shown in Figure 9 being obtained.

If necessary, the tensioning element can then be released and refitted on strap section 7 in order to tension the latter yet further.

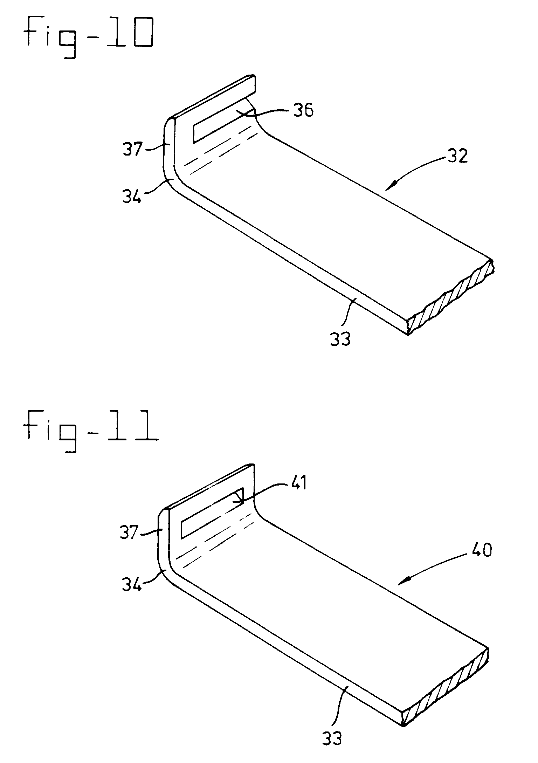

A first variant of the tensioning element 32 is shown in Figure 10. In this embodiment the tensioning head 37 has a slit 36 which is open at one side. A tensioning element of this type must be made of a rigid material and is therefore preferably made of metal.

The tensioning element 40 shown in Figure 11 has a slit 41 which is delimited on both sides. A tensioning element of this type can be made of a less rigid material and can therefore, for example, be made of plastic.

## Claims

1. Pipe bracket which has an annular support element, within which a pipe can be accommodated, which support element has a hole for receiving a screw threaded pin, as well as a nut element for connecting the pin to the support element characterized in that the nut element is slidable essentially the tangential direction with respect to the hole in the support element, and has parallel ribs, the spacing of which is equal to the spacing of the screw thread of the pin.

2. Pipe bracket according to Claim 1, wherein the hole has internal stop nibs to delimit the distance over which a pin can be pushed into the hole from the side facing away from the pipe.

3. Pipe bracket according to Claim 2, wherein the stop nibs are hook-shaped in the direction towards the side facing away from the pipe and oblique on the other side and are each located at the end of a spring arm, which spring arms are each located in an axial groove in the wall of the hole, in such a way that when a pin is inserted from the side facing towards the pipe bracket the stop nibs are forced apart.

4. Pipe bracket according to Claim 1, 2 or 3, wherein the nut element comprises two lips which are each provided with parallel ribs, which lips are located in diametrically opposing positions in the hole.

5. Pipe bracket according to Claim 4, wherein the support element has two slots which open tangentially into the hole and into which the lips can be slid.

6. Pipe bracket according to Claim 4 or 5, wherein the ribs of one lip are offset in their transverse direction by half the rib spacing with respect to the ribs of the other lip.

7. Pipe bracket according to Claim 5 or 6, wherein the lips are joined to one another at one end by a stop plate which in the working position of the lips is in contact with the side of the support element where the slots open.

8. Pipe bracket according to Claim 7, wherein each lip carries a barb-shaped protrusion at its end distal to the stop plate, which barb-shaped protrusion is accommodated in a groove in each slot and can be hooked firmly behind a shoulder provided in the groove.

9. Pipe bracket according to any of Claims 1 - 8, wherein the support element comprises a flexible strip, the length of which is adjustable depending on the diameter of the pipe to be accommodated.

10. Pipe bracket according to Claim 9, wherein the support element comprise a fixing block to which the flexible strip is fixed.

11. Pipe bracket according to Claim 9 or 10, wherein the flexible strip can be secured by means of at least one ratchet connector.

12. Pipe bracket according to Claim 9, 10 or 11, wherein the fixing block is provided with two flexible strips located either side, one of said strips carrying a fastener provided with barb-shaped teeth at its end and the other being provided over at least part of its length with corresponding barb-shaped teeth which face in the opposite direction and which can be made to interact with the teeth of the fastener, depending on the diameter of the pipe to be accommodated.

13. Pipe bracket according to Claim 12, wherein the fastener has a slit running in the longitudinal direction of the associated section of the strap, which slit is delimited on one side by a resilient closing lip provided with barb-shaped teeth.

14. Pipe bracket according to Claim 12 or 13, wherein the fastener and the adjacent strip section merge smoothly into one another on the side facing towards the pipe.

15. Pipe bracket according to claim 10, 11 and one of Claims 12 - 14, wherein fixing block, strip or strips and ratchet connector form one piece made of plastic.

16. Pipe bracket according to one of Claims 10 - 15, wherein the fixing block carries two ridges against which a pipe can be clamped.

17. Pipe bracket according to any of Claims 1 - 16, wherein the hole in the support element has a widened section on the side facing towards the pipe, in which widened section the protruding collar of a knock-in plug can be accommodated.

18. Combination of a pipe bracket according to Claim 17 and a knock-in plug provided with a plastic plug body provided with a collar and a knock-in screw inserted in the plug body.

19. Combination of a pipe bracket according one of Claims 10 - 18 and a tensioning element which can be made to interact with the strip.

20. Combination according to Claim 19, wherein the tensioning element has a toothed shape which can be made to interact with a barb-shaped tooth of the flexible strip provided with teeth.

21. Combination according to Claim 20, wherein the tensioning element has a convex curved surface which can be rolled over a surface of the fastener which is attached to the other flexible strip when the strips are tensioned.

## Patentansprüche

1. Rohrklammer, welche ein ringförmiges Stützelement aufweist, innerhalb welchem ein Rohr aufgenommen werden kann, welches Stützelement ein Loch aufweist zum Aufnehmen eines schraubengewindeten Stiftes, sowie ein Mutterelement zum Verbinden des Stiftes mit dem Stützelement, **dadurch gekennzeichnet**, daß das Mutterelement gleitbar ist, essentiell in der tangentialen Richtung mit Bezug auf das Loch in dem Stützelement, und parallele Rippen aufweist, deren Beabstandung gleich der Beabstandung des Schraubengewindes des Stiftes ist.

2. Rohrklammer nach Anspruch 1, bei welcher das Loch innere Anschlaghaken aufweist zum Begrenzen des Abstandes, über welchem ein Stift in das Loch hineingeschoben werden kann, von der Seite, welche weg von dem Rohr zeigt.

3. Rohrklammer nach Anspruch 2, bei welcher die Anschlaghaken hakenförmig in der Richtung hin zu der Seite sind, welche weg von dem Rohr zeigt, und schräg an der anderen Seite, wobei sie jeweils an dem Ende eines Federarmes angeordnet sind, welche Federarme jeweils in einer axialen Rille in der Wand des Loches angeordnet sind, und zwar in solch einer Weise, daß, wenn ein Stift von der Seite, welche hin zu der Rohrklammer zeigt, eingeführt ist, die Anschlaghaken weggedrängt werden.

4. Rohrklammer nach Anspruch 1, 2 oder 3, bei welcher das Mutterelement zwei Lippen aufweist, welche jeweils bereitgestellt sind mit parallelen Rippen, welche Lippen an diametral gegenüberliegenden Positionen in dem Loch angeordnet sind.

5. Rohrklammer nach Anspruch 4, bei welcher das Stützelement zwei Schlitze aufweist, welche tangential hinein in das Loch münden, und in welche die Lippen gleitbar eingeführt werden können.

6. Rohrklammer nach Anspruch 4 oder 5, bei welcher die Rippen von einer Lippe versetzt sind in ihrer transversalen Richtung um eine halbe Rippenbeabstandung mit Bezug zu den Rippen der anderen Lippe.

7. Rohrklammer nach Anspruch 5 oder 6, bei welcher die Lippen miteinander an einem Ende verbunden sind durch eine Anschlagplatte, welche in der Arbeitsposition der Lippen in Kontakt ist mit der Seite des Stützelementes, an welcher die Schlitze münden.

8. Rohrklammer nach Anspruch 7, bei welcher jede Lippe einen widerhakenförmigen Vorsprung an ihrem distalen Ende zu der Anschlagplatte trägt, welcher widerhakenförmige Vorsprung in einer Rille in jedem Schlitz aufgenommen ist, und fest hinter eine Schulter gehakt werden kann, welche in der Rille bereitgestellt ist.

9. Rohrklammer nach einem der Ansprüche 1 bis 8, bei welcher das Stützelement einen flexiblen Streifen umfaßt, dessen Länge einstellbar ist, abhängig von dem Durchmesser des aufzunehmenden Rohres.

10. Rohrklammer nach Anspruch 9, bei welcher das Stützelement einen Befestigungsklotz umfaßt, an weichem der flexible Streifen befestigt ist.

11. Rohrklammer nach Anspruch 9 oder 10, bei welcher der flexible Streifen mittels zumindest eine Ratschenverbindung gesichert werden kann.

12. Rohrklammer nach Anspruch 9, 10 oder 11, bei welcher der Befestigungsklotz bereitgestellt ist mit zwei flexiblen Streifen, angeordnet an jeder Seite, wobei einer der Streifen einen Festmacher trägt, bereitgestellt mit widerhakenförmigen Zähnen an seinem Ende, und wobei der andere bereitgestellt ist über zumindest einen Teil seiner Länge mit entsprechenden widerhakenförmigen Zähnen, welche in die entgegengesetzte Richtung zeigen, und welche veranlaßt werden können, mit den Zähnen des Festmachers wechselzuwirken, und zwar abhängig von dem Durchmesser des aufzunehmenden Rohres.

13. Rohrklammer nach Anspruch 12, bei welcher der Festmacher einen Schlitz aufweist, welcher in der longitudinalen Richtung des zugeordneten Abschnittes des Streifens bzw. Bandes verläuft, welcher Schlitz begrenzt ist an einer Seite durch eine elastische Verschlußlippe, welche bereitgestellt ist mit widerhakenförmigen Zähnen.

14. Rohrklammer nach Anspruch 12 oder 13, bei welcher der Festmacher und der benachbarte Streifenabschnitt glatt ineinander übergehen an der Seite, welche zu dem Rohr zeigt.

15. Rohrklammer nach Anspruch 10, 11 und einem der Ansprüche 12 bis 14, bei welcher der Befestigungsklotz, der oder die Streifen und die Ratschenverbindung ein Teil bilden, welches aus Kunststoff hergestellt ist.

16. Rohrklammer nach einem der Ansprüche 10 bis 15, bei welcher der Befestigungsklotz zwei Kanten bzw. Grate trägt, gegen welche ein Rohr geklemmt werden kann.

17. Rohrklammer nach einem der Ansprüche 1 bis 16, bei welcher das Loch in dem Stützelement einen verbreiterten Abschnitt an der Seite aufweist, welche zu dem Rohr zeigt, in welchem verbreiterten Abschnitt der vorspringende Kragen eines Einschlagdübels aufgenommen werden kann.

18. Kombination einer Rohrklammer nach Anspruch 17 und eines Einschlagdübels, bereitgestellt mit einem Kunststoffdübelkörper, welcher bereitgestellt ist mit einem Kragen und einer Einschlagschraube, welche in den Dübelkörper eingeführt ist.

19. Kombination einer Rohrklammer nach einem der Ansprüche 10 bis 18 und eines Spannelements, welches gebildet sein kann zum Wechselwirken mit dem Streifen.

20. Kombination nach Anspruch 19, bei welcher das Spannelement eine gezahnte Form aufweist, welche hergestellt sein kann zum Wechselwirken mit einem widerhakenförmigen Zahn des flexiblen Streifens, welcher mit Zähnen bereitgestellt ist.

21. Kombination nach Anspruch 20, bei welcher das Spannelement eine konvex gekrümmte Fläche aufweist, welche über eine Fläche des Festmachers gerollt werden kann, welcher an dem anderen flexiblen Streifen befestigt ist, wenn die Streifen gespannt werden.

## Revendications

1. Collier pour tuyaux qui comporte un élément de support annulaire, au sein duquel un tuyau peut être logé, lequel élément de support comporte un trou pour recevoir une tige filetée à vis, ainsi qu'un élément écrou pour relier la tige à l'élément de support caractérisé en ce que l'élément écrou est adapté à glisser sensiblement dans la direction tangentielle par rapport au trou dans l'élément de support, et comporte des nervures parallèles, dont l'espacement est égal à l'espacement du filetage de la tige.

2. Collier pour tuyaux selon la revendication 1, dans lequel le trou comporte des becs d'arrêt internes pour limiter la distance sur laquelle une tige peut être poussée dans le trou depuis le côté donnant loin du tuyau.

3. Collier pour tuyaux selon la revendication 2, dans lequel les becs d'arrêt sont en forme de crochets en direction du côté donnant loin du tuyau et obliques sur l'autre côté et sont positionnés chacun à l'extrémité d'un bras élastique, lesquels bras élastiques sont positionnés chacun dans une rainure axiale dans la paroi du trou, de manière que lorsqu'une tige est insérée depuis le côté donnant vers le collier pour tuyaux, les becs d'arrêt soient amenés de force à s'écarter.

4. Collier pour tuyaux selon la revendication 1, 2 ou 3, dans lequel l'élément écrou comprend deux projections qui sont chacune dotées de nervures parallèles, lesquelles projections sont en des positions diamétralement opposées dans le trou.

5. Collier pour tuyaux selon la revendication 4, dans lequel l'élément de support comporte deux ouvertures qui s'ouvrent tangentiellement dans le trou et dans lesquelles les projections peuvent être glissées.

6. Collier pour tuyaux selon la revendication 4 ou 5, dans lequel les nervures d'une projection sont décalées dans leur direction transversale d'un espace d'une demi-nervure par rapport aux nervures de l'autre projection.

7. Collier pour tuyaux selon la revendication 5 ou 6, dans lequel les projections sont reliées l'une à l'autre à une extrémité par une plaque d'arrêt qui, dans la position de fonctionnement des projections, est en contact avec le côté de l'élément de support où les ouvertures s'ouvrent.

8. Collier pour tuyaux selon la revendication 7, dans lequel chaque projection porte des dents en pointe à son extrémité distale par rapport à la plaque d'arrêt, lesquelles dents en pointe sont logées dans une rainure dans chaque ouverture et peuvent être solidement encliquetées derrière un épaulement formé dans la rainure.

9. Collier pour tuyaux selon l'une quelconque des revendications 1 à 8, dans lequel l'élément de support comprend une bande flexible, dont la longueur est réglable en fonction du diamètre du tuyau à loger.

10. Collier pour tuyaux selon la revendication 9, dans lequel l'élément de support comprend un bloc de fixation auquel la bande flexible est fixée.

11. Collier pour tuyaux selon la revendication 9 ou 10, dans lequel la bande flexible peut être fixée au moyen d'au moins un raccord à cliquet.

12. Collier pour tuyaux selon la revendication 9, 10 ou 11, dans lequel le bloc de fixation est doté de deux sections de bande flexible de chaque côté, l'une desdites sections de bande portant une attache dotée de dents en pointe à son extrémité et l'autre section étant dotée, sur au moins une partie de sa longueur, de dents en pointe correspondantes qui donnent dans la direction opposée et qui peuvent être amenées à coopérer avec les dents de l'attache, selon le diamètre du tuyau à loger.

13. Collier pour tuyaux selon la revendication 12, dans lequel l'attache comporte une fente s'étendant dans la direction longitudinale de la section de bande associée, laquelle fente est délimitée sur une face par une projection de fermeture élastique dotée de dents en pointe.

14. Collier pour tuyaux selon la revendication 12 ou 13, dans lequel l'attache et la section de bande adjacente fusionnent doucement l'une dans l'autre sur le côté donnant vers le tuyau.

15. Collier pour tuyaux selon la revendication 10, 11 et l'une des revendications 12 à 14, dans lequel le bloc de fixation, la bande ou les bandes et le raccord à cliquet forment une seule pièce en plastique.

16. Collier pour tuyaux selon l'une quelconque des revendications 10 à 15, dans lequel le bloc de fixation porte deux crêtes contre lesquelles un tuyau peut être serré.

17. Collier pour tuyaux selon l'une quelconque des revendications 1 à 16, dans lequel le trou dans l'élément de support comporte une section élargie sur le côté donnant vers le tuyau, dans laquelle section élargie la collerette en projection d'un bouchon à enfoncement peut être reçue.

18. Combinaison d'un collier pour tuyaux selon la revendication 17 avec un bouchon à enfoncement doté d'un corps en plastique avec une collerette et d'une vis à enfoncement insérée dans le corps du bouchon.

19. Combinaison d'un collier pour tuyaux selon l'une quelconque des revendications 10 à 18 avec un élément de tension qui peut être amené à coopérer avec la bande.

20. Combinaison selon la revendication 19, dans laquelle l'élément de tension a une configuration dentée qui peut être amenée à coopérer avec les dents en pointe de la bande flexible dentée.

21. Combinaison selon la revendication 20, dans laquelle l'élément de tension a une surface coudée convexe qui peut être roulée sur une surface de l'attache qui est fixée à l'autre section de bande flexible lorsque les sections de bande sont tendues.
